# EUROPÄISCHE PATENTANMELDUNG

(11) **EP 1 923 116 A1**
(43) Veröffentlichungstag der Anmeldung: **21.05.2008**
(21) Anmeldenummer: 07022434.0
(22) Anmeldetag: 19.11.2007
(51) Int. Cl.: B01D 29/90, B01D 35/30

(54) **Filter für fluide Substanzen**

(30) Priorität: 20.11.2006 DE 102006054864
(71) Anmelder: Fürst Handelshaus GmbH, 83101 Rohrdorf (DE)
(72) Erfinder: Fürst, Elmar, 83101 Rohrdorf (DE)
(74) Vertreter: Kesselhut, Wolf

(57) **Zusammenfassung**

Filter (1) für fluide Substanzen, bestehend aus einem Filtergehäuse (2) mit wenigstens einem Zufluss (7) und wenigstens einem Abfluss (9) sowie einem Filtermedium (8) im Inneren des Filtergehäuses (2), wobei als Filtermedium (8) ein absorbierendes Vliesmaterial verwendet wird, das Filtergehäuse (2) im Inneren eine strukturierte Oberfläche (5, 6, 12, 13, 14) zur Erzeugung von turbulenten Strömungen bei den fluiden Substanzen aufweist und vorzugsweise aus so genannten thermoplastischen Kunststoffen besteht und wobei als absorbierendes Vliesmaterial ein mehrlagiges, geschichtetes, absorbierendes Vliesmaterial verwendet wird.

## Beschreibung

Die vorliegende Erfindung betrifft einen neuartigen Filter für fluide Substanzen, bestehend aus einem Filtergehäuse mit wenigstens einem Zufluss und wenigstens einem Abfluss sowie einem Filtermedium im Inneren des Filtergehäuses, wobei als Filtermedium ein absorbierendes Vliesmaterial verwendet wird, das Filtergehäuse im Inneren eine strukturierte Oberfläche zur Erzeugung von turbulenten Strömungen bei den fluiden Substanzen aufweist und aus entsprechenden Kunststoffen besteht und wobei als absorbierendes Vliesmaterial ein mehrlagiges, geschichtetes, absorbierendes Vliesmaterial verwendet wird.

Weiterhin betrifft die vorliegende Erfindung ein Verfahren zur Herstellung eines solchen Filters sowie dessen Verwendung zum Filtern von Ölen, Kraftstoffen oder anderen fluiden Substanzen u. a. auch zum Filtern von Kraftstoffen vor deren Verbrennung.

Verbrennungsmotoren benötigen oft erhebliche Mengen an Ölen, damit die in Bewegung befindlichen Teile der Motoren möglichst reibungsfrei betrieben werden können.

Insbesondere bei längeren Betriebszeiten sammeln sich in den Ölen Verunreinigungen an, die sich auf Teilen des Motors ablagern können und dessen Betrieb somit beeinträchtigen können. Mit Hilfe von Filtern ist es möglich, die verwendeten Motoröle zu reinigen, wodurch die Betriebszeiten der Verbrennungsmotoren gesteigert werden können. Derartige Filter werden nicht nur bei Verbrennungsmotoren, sondern bei praktisch allen Arten von Motoren eingesetzt, bei denen die sich bewegenden Teile der Motoren bestimmte Mengen an fluiden Substanzen, insbesondere an geeigneten Ölen als Schmierstoffe benötigen.

Aus der DE-U 202 14 023 ist eine Filterpackung zum Filtern von flüssigen oder gasförmigen Substanzen bekannt, wobei diese in ein Filtergehäuse mit einem Zulauf und einem Ablauf für die zu filtrierenden Substanzen einsetzbar ist und wobei ein Überdruckventil dafür sorgt, dass je nach Erreichen eines bestimmten Druckwertes die fluide Substanz entweder gefiltert wird oder aber ungefiltert zum Motor strömen kann. Auf diese Weise soll einerseits eine rasche Versorgung des Motors beim Start ermöglicht werden und andererseits das verwendete Öl ausreichend oft gefiltert werden.

Die EP-B 401 329 beschreibt ebenfalls einen Ölfilter für Verbrennungsmotoren, der aus Einzelteilen eines Bausatzes besteht und u. a. zwei Deckel jeweils oben und unten sowie einen mittigen Kern aufweist, um den eine Filterpackung aus Saugpapier angeordnet ist. An den Wandteilen dieses Ölfilters können u. a. Kühlrippen angebracht werden. Der dort beschriebene Ölfilter zeichnet sich insbesondere dadurch aus, dass das Öl nur sehr selten ausgetauscht werden muss.

Gegenstand der EP-B 503 028 ist eine Filterpackung aus Saugpapieren und einem dazugehörigen Filtergehäuse, wobei Stabilisierungselemente die Filterpackung fixieren sollen, da diese bei längeren Laufzeiten durch den Druck der durchströmenden fluiden Substanzen zusammen gepresst werden kann. Dadurch sollen die Betriebszeiten derartiger Filter gesteigert werden. Die fluiden Substanzen können sowohl im Gleichstrom als auch im Gegenstrom die Filterpackung durchdringen. An der Eintrittsfläche sind die Stabilisierungselemente quer zur Strömungsrichtung angeordnet.

Die bisher bekannten Filter für fluide Substanzen bestehen üblicherweise aus einem metallischen Filtergehäuse, beispielsweise aus Aluminium, Eisen, Stahl, Kupfer oder aus den entsprechenden Legierungen und weisen im Inneren meist eine glatte Oberfläche auf. Das Filtergehäuse ist häufig schwer und von seiner Bauweise her u. a. durch die Verwendung von metallischen Gegenständen hinsichtlich seiner Form nicht sehr flexibel. Um den Austausch der Filter zu erleichtern, ist es wünschenswert, neuartige Filter zu entwickeln, welche leichter sind als die bisher bekannten Filter und die hinsichtlich ihrer Form besser der jeweiligen Umgebung in den Motoren angepasst werden können.

Der vorliegenden Erfindung lag daher die Aufgabe zu Grunde, den geschilderten Nachteilen abzuhelfen und einen neuartigen Filter für fluide Substanzen, insbesondere für Motoröle zu entwickeln, der sich u. a. durch ein möglichst geringes Gewicht auszeichnet und der durch seine spezielle Form in besonderer Weise dazu geeignet ist, zu verhindern, dass sich Verunreinigungen auf Teilen von Motoren ablagern und auf diese Weise die Betriebszeiten des Filters verringern.

Demgemäß wurde ein neuartiger Filter für fluide Substanzen entwickelt, bestehend aus einem Filtergehäuse mit wenigstens einem Zufluss und wenigstens einem Abfluss sowie einem Filtermedium im Inneren des Filtergehäuses, wobei als Filtermedium ein absorbierendes Vliesmaterial verwendet wird, das Filtergehäuse im Inneren eine strukturierte Oberfläche zur Erzeugung von turbulenten Strömungen bei den fluiden Substanzen aufweist und aus entsprechenden Kunststoffen besteht und wobei als absorbierendes Vliesmaterial ein mehrlagiges, geschichtetes, absorbierendes Vliesmaterial verwendet wird.

Vorzugsweise wird dabei ein solches mehrlagiges, geschichtetes, absorbierendes Vliesmaterial eingesetzt, welches im Inneren keinen Kern aufweist, d.h. im Inneren liegt kein Hohlraum vor. Es ist aber auch möglich, ein solches absorbierendes Vliesmaterial zu verwenden, welches einen Hohlraum enthält. Die Bezeichnung geschichtetes, absorbierendes Vliesmaterial bezieht sich darauf, dass dieses nicht in Form von einzelnen Blättern für den erfindungsgemäßen Zweck eingesetzt werden soll, sondern vielmehr als so genannte Schichtung von mehreren aufeinander gestapelten Abschnitten des absorbierenden Vliesmaterials oder aber als so genannte Wickelung vorliegt, wobei das absorbierende Vliesmaterial u. a. zu einer Rolle aufgewickelt werden kann.

Der erfindungsgemäße Filter eignet sich insbesondere zum Filtern verschiedenartiger fluider Substanzen, beispielsweise von Ölen, Schmierstoffen, Kraftstoffen oder anderer fluider Medien, u. a. von wässrigen oder organischen Flüssigkeiten oder von Emulsionen. Er besteht aus einem Filtergehäuse mit wenigstens einem Zufluss und wenigstens einem Abfluss und kann vorzugsweise auch vergleichbar einer Kartusche in ein weiteres äußeres Gehäuse eingesetzt werden, welches ebenfalls mindestens einen Zufluss und einen Abfluss aufweist. Auf diese Weise sind die erfindungsgemäßen Filter leicht austauschbar.

Das Filtergehäuse des erfindungsgemäßen Filters weist vorzugsweise eine runde längliche Form auf, die der einer Säule ähnelt. Je nach Einsatzgebiet des Filters beträgt die Länge des Gehäuses ca. 10 bis 100 cm, insbesondere ca. 15 bis 60 cm und dessen Durchmesser etwa 5 bis 50 cm, vorzugsweise etwa 8 bis 40 cm. Neben der Säulenform sind selbstverständlich auch andere geometrische Formen denkbar, beispielsweise die Form eines Rechtecks oder die eines Quadrats.

Mehrere der erfindungsgemäßen Filter können sowohl parallel zueinander als auch in Reihe geschaltet werden. Es empfiehlt sich, das Volumen des Filters an die Menge der zu filtrierenden fluiden Substanzen sowie an deren Reinheit anzupassen.

Der erfindungsgemäße Filter ist weiterhin vorzugsweise dadurch gekennzeichnet, dass das Filtergehäuse im Inneren eine solche strukturierte Oberfläche enthält, die sich vom Zufluss zum Abfluss hin in Bezug auf ihre Form und/oder ihre Geometrie ändert. Auf diese Weise wird erreicht, dass die fluide Substanz beim Durchströmen der Filterpackung mindestens einmal ihre Richtung ändert, wodurch Turbulenzen entstehen können, welche Ablagerungen an den Innenwänden des Filters beseitigen können.

Das Gehäuse des Filters kann im Inneren einerseits geschlossene geometrische Strukturen aufweisen, beispielsweise Kreise, Spiralen, Ovale, Rechtecke, Quadrate oder aber auch Rauten. Andererseits ist es auch möglich, dass die strukturierte Oberfläche linienförmige Strukturen enthält. Unter der Bezeichnung linienförmige Strukturen sollen sowohl durchgehende Linien als auch unterbrochene Linien verstanden werden. Weiterhin können auch Strukturen von sich kreuzenden Linien vorliegen. Vorzugsweise sollen sich die linienförmigen Strukturen in Richtung vom Zufluss zum Abfluss hin mindestens einmal in der Weise ändern, dass der Winkel, welcher sich aus der gedachten Verbindungslinie zwischen dem Zufluss und dem Abfluss einerseits und den linienförmigen Strukturen andererseits ergibt, sich mindestens einmal um wenigstens 1 °, vorzugsweise um wenigstens 5° und insbesondere um wenigstens 10° ändert. Um die fluide Substanz in jedem Fall zu einer Richtungsänderung entlang der inneren Oberfläche zu zwingen, sollen auch die geschlossenen geometrischen Strukturen entlang der gedachten Verbindungslinie in Richtung vom Zufluss zum Abfluss hin wenigstens eine strukturelle Änderung erfahren.

Bezogen auf den gesamten Durchmesser des Filtergehäuses liegt der Anteil des Durchmessers der strukturierten Wanddicke vorzugsweise bei weniger als 10 %, insbesondere bei 2 bis 5%.

Das Filtergehäuse kann auch in der Weise ausgestaltet werden, dass sich der Durchmesser entlang der gedachten Verbindungslinie vom Zufluss zum Abfluss hin ändert, wodurch das Filtergehäuse sowohl eine konvexe als auch eine konkave Form annehmen kann. Auf diese Weise kann ebenfalls die Strömungsgeschwindigkeit der fluiden Substanz beeinflusst werden.

Der erfindungsgemäße Filter kann weiterhin noch Abdeckungen, wie zum Beispiel Deckel am Zufluss und/oder am Abfluss aufweisen, um den Filter gegebenenfalls auch abschließen zu können. Vorzugsweise sollte der Abfluss des Filters einen solchen Deckel enthalten. Es empfiehlt sich, den Deckel drehbar auszugestalten, beispielsweise durch ein Gewinde.

Weiterhin sollte das Filtergehäuse nicht etwa aus verschiedenen Einzelteilen eines Bausatzes bestehen, sondern vorzugsweise im Wesentlichen aus einem, möglichst geschlossenen Teil aus einem entsprechenden Kunststoff aufgebaut sein. Vorzugsweise soll dabei das Filtergehäuse aus einem so genannten thermoplastischen Kunststoff bestehen. Das Filtergehäuse kann aber noch eine wenige kleine Bauteile aufweisen, die nicht aus dem gewählten, bevorzugt thermoplastischen Kunststoff bestehen, sondern aus einem anderen, vorzugsweise thermoplastischen Kunststoff oder aber aus Metallen. Wichtig ist, dass der wesentliche Teil des Filtergehäuses ein ganzes, in sich geschlossenes, aus einem bevorzugt thermoplastischen Kunststoff bestehendes Teil darstellt. Darüber hinaus ist es auch möglich, dass der erfindungsgemäße Filter aus zwei verschiedenen Filtergehäusen mit gleichen oder unterschiedlichen Filtermedien besteht, die u. a. durch Verschrauben miteinander verbunden werden können. Auf diese Weise können zwei erfindungsgemäße Filter mit unterschiedlichen Eigenschaften zu einem neuen erfindungsgemäßen Filter kombiniert werden.

Als geeignete thermoplastische Kunststoffe kommen u. a. Polystyrole, Polyamide, Polyester, Polyvinylchlorid (PVC), Polysulfone, Polyetherketone, Polycycloolefine, Polyacrylate, Polymethacrylate, Polycarbonate, Polyurethane, Polyacetale wie zum Beispiel Polyoxymethylen, Polyacetate, Polyethersulfone oder Polyolefine in Betracht. Dabei sind sowohl Homopolymere als auch Copolymere dieser thermoplastischen Kunststoffe einsetzbar. Vorzugsweise besteht das Filtergehäuse aus Polyolefinen wie beispielsweise Polyethylen, Polypropylen, Polybut-1en, Polyisobutylen, Polypent-1-en oder aber Polyhex-1-en, wobei insbesondere Polyethylen oder Polypropylen verwendet wird.

Unter der Bezeichnung Polyethylen sollen dabei sowohl Homopolymere als auch Copolymere des Ethylens mit untergeordneten Anteilen anderer C3-C10 Alk-1-ene verstanden werden, beispielsweise mit Propylen, But-1-en, Pent-1-en, Hex-1-en oder Oct-1-en.
Weiterhin kommen hierbei Copolymere des Ethylens mit copolymerisierbaren polaren Comonomeren in Betracht, beispielsweise mit Vinylacetat oder aber mit ungesättigten Acrylaten oder Methacrylaten. Derartige Polyethylene sind u.a. durch Dichten von 0.89 bis 0,98 g/cm3, insbesondere von 0,89 bis 0,96 g/cm3 gekennzeichnet. Die Herstellung solcher Polyethylene erfolgt u. a. durch übliche Verfahren, beispielsweise durch Hochdruckpolymerisation mit radikalischen Initiatoren, oder aber durch katalytische Polymerisation mit titanhaltigen Ziegler-Katalysatoren, metallocenhaltigen Katalysatoren oder aber mit chromhaltigen Philippskatalysatoren.

Weitere besonders geeignete thermoplastische Kunststoffe sind Homopolymere und Copolymere des Propylens mit untergeordneten Anteilen anderer C2-C10-Alk-1-ene, beispielsweise mit Ethylen oder mit But-1-en, Pent-1-en, Hex-1-en oder Oct-1-en.
Es können dabei auch zwei oder mehrere verschiedene Comonomere im Polypropylen verwendet werden. Derartige Polypropylene weisen vorzugsweise eine Schmelzflußrate (MFR), nach ISO 1133, von 0,1 bis 200 g/10 min., insbesondere von 0,2 bis 150 g/10 min. und besonders bevorzugt von 0,5 bis 100 g/10 min., bei 230°C und unter einem Gewicht von 2,16 kg, auf. Die Schmelzflussrate entspricht dabei der Menge an Polymer, die innerhalb von 10 Minuten aus der nach ISO 1133 genormten Prüfvorrichtung bei einer Temperatur von 230° C und unter einem Gewicht von 2,16 kg ausgepresst wird. Die Herstellung derartiger Polypropylene kann beispielsweise mit Hilfe so genannter Ziegler-Natta-Katalysatoren erfolgen. Es können aber auch Katalysatorsysteme auf der Basis von polymerisationsaktiven Metallkomplexen, so genannten Metallocenen, eingesetzt werden.

Das Gehäuse des erfindungsgemäßen Filters kann auch aus so genannten halogenierten Kunststoffen aufgebaut sein, insbesondere aus halogenierten Polyolefinen. Besonders bevorzugt sind dabei vor allem fluorierte Polyethylene oder aber fluorierte Polypropylene. Derartige fluorierte Polyolefine haben u. a. den Vorteil, dass bei ihnen auch bei höheren Temperaturen praktisch keine Diffusion der Öle aus dem Filtergehäuse beobachtet werden kann. Weitere geeignete fluorierte Polymere sind u. a. Polytetrafluorethylen (PTFE) oder aber Polyvinylfluorid.

Die Herstellung des Filtergehäuses kann nach üblichen Verfahren der Kunststoffverarbeitung erfolgen, u. a. durch Schmelzextrusion, durch Blasformen, durch Strangpressen oder aber durch Spritzgießen, ausgehend von den entsprechend gewählten, vorzugsweise thermoplastischen Kunststoffen. Bevorzugte Herstellungsverfahren sind insbesondere das Blasformen oder das Spritzgießen. Dabei werden die gewählten vorzugsweise thermoplastischen Polymere zunächst geschmolzen, dann in ein Werkzeug eingebracht, das dem Filtergehäuse entsprechen soll und dort anschließend wieder erkaltet.

Weiterhin weist der erfindungsgemäße Filter als Filtermedium ein absorbierendes Vliesmaterial auf, wobei unter dieser Bezeichnung sowohl so genannte Vliesstoffe (nonwovens) als auch so genannte Tissuepapiere verstanden werden sollen. Unter der Bezeichnung "nonwovens" versteht man üblicherweise flexible, poröse, aus Textil- oder aus Kunststofffasern bestehende Flächengebilde. Tissuepapiere oder auch Hygienepapiere genannt bestehen überwiegend aus Cellulosefasern und zeichnen sich u. a. durch ein relativ geringes Flächengewicht aus. Besonders geeignete Filtermedien sind mehrlagige, geschichtete, absorbierende Vliesmaterialien, insbesondere mehrlagige, geschichtete Tissuepapiere. Vorzugsweise sollen die eingesetzten absorbierenden Vliesmaterialien bzw. Tissuepapiere im Inneren keinen Kern aufweisen, d.h. im wesentlichen keinen Hohlraum. Derartige absorbierende Vliesmaterialien zeichnen sich durch ein Flächengewicht von etwa 20 bis 300 g/m2, insbesondere von 25 bis 200 g/m2 und besonders bevorzugt von 30 bis 80 g/m2 und durch einen sogenannten "Bulk" (Volumen/Gramm) von 3 bis 100 cm3/g, insbesondere von 5 bis 80 cm3/g und besonders bevorzugt von 6 bis 60 cm3/g aus. Weiterhin weisen solche absorbierende Vliesmaterialien u. a. eine Trocken- bzw. Nassfestigkeit von 1 bis 10 000 N/m, insbesondere von 10 bis 5 000 N/m auf. Es kann sich empfehlen, dass die einzelnen Lagen des absorbierenden Vliesmaterials aus unterschiedlichen Fasern bestehen. Geeignete mehrlagige, geschichtete absorbierende Vliesmaterialien weisen insbesondere zwei, drei, vier, fünf oder sechs Lagen auf.

Übliche Faserrohstoffe für derartige absorbierende Vliesmaterialien sind u. a. Naturfasern oder Vliese aus Kunstfasern, wobei auch Mischungen aus Naturfasern oder Kunstfasern eingesetzt werden können.

Geeignete Faserprodukte sind u. a. Zellstoffe, die nach üblichen Aufschlussverfahren, beispielsweise nach dem Sulfitverfahren oder aber nach dem Sulfatverfahren aus Nadelholz, beispielsweise aus Fichten-, Tannen-, Kiefern- oder Lärchenholz, aus Laubholz, beispielsweise aus Buchen-, Birken- Pappel- oder Eukalyptusholz oder aber aus Einjahrespflanzen, beispielsweise aus Baumwolle, Bambus, Hanf oder Sisal gewonnen werden. Als Faserprodukte können auch Zellstoffe verwendet werden, die von wiederverwertetem Papier stammen. Daneben können auch Kunstfasern, wie beispielsweise Polyethylenfasern, Polypropylenfasern, Polyesterfasern, insbesondere auf Basis von aromatischen Polyestern wie Polyethylenterephthalat sowie Polyvinylalkohol eingesetzt werden.

Aus derartigen Zellstoffen und gegebenenfalls Kunstfasern können u.a. nach dem TAD (Through Air Drying)-Verfahren oder aber nach konventionellen Trocknungsverfahren geeignete bahnförmige, gekreppte oder aber auch ungekreppte Rohtissueprodukte hergestellt werden, welche gegebenenfalls noch mit üblichen Naßfestmitteln, Trockenfestmitteln, Weichmachern oder anderen Hilfs- und Zusatzstoffen für die Papierherstellung versetzt werden können.

Gut geeignete Filtermedien sind vor allem auch solche mehrlagigen, absorbierenden Vliesmaterialien, bei denen wenigstens eine Lage, vorzugsweise zwei, drei, vier bzw. alle Lagen geprägt sind. Durch das Prägen können beim absorbierenden Vliesmaterial Flächen mit unterschiedlichen Dichtezonen gebildet werden. Beim Prägen von solchen Materialien werden diese im so genannten Converting-Teil der Herstellung einer mechanischen Deformation unterworfen, wobei einzelne oder aber auch mehrere Faserbahnen durch eine oder mehrere Prägestationen hindurchgeführt werden. Derartige Prägestationen bestehen üblicherweise aus einer Prägewalze, die in geeigneter Weise geformte Prägenoppen auf ihrer Oberfläche aufweist und einer Gegenwalze, die vorzugsweise aus einem solchen Oberflächenmaterial aufgebaut ist, das unter Druck nachgibt. Zwischen der Prägewalze und der Gegenwalze wird dabei ein solcher Spaltabstand gewählt, dass auf die hin durchgeführte Bahn des Tissuepapiers oder des non-wovens ein entsprechendes Prägemuster aufgeprägt werden kann. Ein solches Prägemuster kann aus verschiedenen Formen bestehen, welche voneinander getrennt oder aber miteinander verbunden sind.

Die Verbindung der einzelnen Lagen des absorbierenden Vliesmaterials kann unter anderem dadurch erreicht werden, dass diese durch geeignete Klebstoffe, beispielsweise durch Stärke, durch Carboxymethylcellulose oder aber durch spezielle Polymere miteinander verbunden werden. Die einzelnen Lagen können aber auch u. a. durch ein so genanntes "edge embossing", durch sogenanntes "needling" oder durch den Einsatz von Ultraschall miteinander kombiniert werden.

Es kann sich empfehlen, die einzelnen Lagen des absorbierenden Vliesmaterials mit einer unterschiedlichen Zahl und einer unterschiedlichen Form von Prägenoppen mechanisch zu behandeln, beispielsweise mit einer Prägenoppendichte von mindestens 10 Noppen/cm2, insbesondere von mindestens 15 Noppen/cm2.

Darüber hinaus kann das absorbierende Vliesmaterial auch eine solche Lage aufweisen, die Fasern aus thermoplastischen Kunststoffen enthält, beispielsweise Fasern aus Polyolefinen, aus Polyamiden oder aber aus Polyestern. Das verwendete absorbierende Vliesmaterial kann auch perforiert sein, um auch auf diese Weise die Fließgeschwindigkeit der zu filtrierenden fluiden Substanzen zu beeinflussen.

Durch die Wahl der jeweiligen Fasern und die Anzahl der Lagen sowie die Art, das Design und die Anzahl der Prägemuster ist es möglich, insbesondere die radiale Strömung der fluiden Substanzen zu fördern, um auf diese Weise die Eigenschaften des absorbierenden Vliesmaterials vor allem hinsichtlich seiner Filterfähigkeit zu verbessern.

Es ist auch möglich, mehrere absorbierende Vliesmaterialien als Filtermedien sowohl in Reihe als auch parallel zu schalten, um auf diese Weise den Fluss der fluiden Substanzen durch das Filtergehäuse zu optimieren und ein besseres Filterergebnis zu erzielen. In die verwendeten Hygienepapiere können auch Depots aus Superabsorbern, beispielsweise auf Basis von vernetzter Polyacrylsäure eingebaut werden, um so störende Wasserreste zu binden.

Das im erfindungsgemäßen Filter eingesetzte Filtermedium, d.h. das absorbierende Vliesmaterial weist bevorzugt eine runde längliche Form auf, die in etwa einer Säule entspricht. Das Vliesmaterial liegt dabei im Regelfall als gewickelte Lagenschichtung vor, die am unteren Teil vorzugsweise geschlossen ist. Die zu filtrierende fluide Substanz durchströmt von oben her das säulenförmige Filtermedium und fließt dann überwiegend radial nach außen, wobei es der Filterwirkung des absorbierenden Vliesmaterials unterworfen wird. Das vorzugsweise säulenförmige, mehrlagige, absorbierende Vliesmaterial weist eine Länge von insbesondere 8 bis 95 cm, besonders bevorzugt von 10 bis 55 cm und einen Durchmesser von etwa 4 bis 45 cm, insbesondere von 5 bis 35 cm auf. Das säulenförmige, mehrlagige Vliesmaterial kann auch in der Weise ausgestaltet werden, dass dessen Durchmesser variiert wird, wodurch letztlich konvexe oder aber konkave Formen entstehen können. Es kann sich empfehlen, an das Filtermedium einen Haken, einen Dübel, einen Faden oder ein Band zu befestigen, um auf diese Weise zu erreichen, dass dieses möglichst leicht ausgewechselt werden kann. Vorzugsweise sollte das gewählte Befestigungsmittel, d.h. der Haken, der Dübel, der Faden oder das Band aus einem solchen Kunststoff bestehen, der sich in der fluiden, zu filtrierenden Substanz nicht löst.

Das Filtermedium kann auch an seiner Stirnseite Öffnungen aufweisen, um so eine raschere Penetration der fluiden Substanz ins Innere des Filtermediums zu gewährleisten.

Weiterhin kann es sich empfehlen, dass sowohl das absorbierende Vliesmaterial und/oder das Filtergehäuse des erfindungsgemäßen Filters zusätzlich Substanzen aufweisen, welche zur kontrollierten Abgabe von chemischen Additiven geeignet sind. Derartige Substanzen binden einerseits das chemische Additiv am Filtergehäuse und/oder am Filtermedium und ermöglichen andererseits eine zeitlich und mengenmäßig kontrollierte Abgabe von geeigneten Additiven an die zu filtrierenden Öle, Kraftstoffe und wässrigen bzw. organischen Flüssigkeiten. Auf diese Weise kann einerseits das Filterergebnis verbessert werden und andererseits die Qualität der zu filtrierenden Öle, Kraftstoffe oder wässrigen bzw. organischen Flüssigkeiten positiv beeinflusst werden. Hierfür gut geeignete Substanzen sind u. a. Triazine, Cyclodextrine, organische Chelate oder aber so genannte Fullerene, welche alle in der Lage sind, die besagten chemischen Additive innerhalb ihrer räumlichen Struktur einerseits einschließen zu können und andererseits bei Bedarf kontrolliert wieder abgeben zu können. Übliche chemische Additive sind u. a. Antiklopfmittel, Korrosionsinhibitoren, Metalldesaktivatoren, Mikrobiozide, Antioxidantien, Vergaserreinigungsmittel, Rückstandsumwandler und Antiicing-Mittel bei Ölen und Kraftstoffen oder aber Wasserenthärter, Sauerstoffentferner oder Puffer bei wässrigen Flüssigkeiten.

Die vorliegende Erfindung umfasst auch ein Verfahren zur Herstellung des erfindungsgemäßen Filters. Dabei wird zunächst das Filtergehäuse durch Blasformen oder Spritzgießen bzw. Strangpressen oder aber durch Schmelzextrusion aus den entsprechenden vorzugsweise thermoplastischen Kunststoffen hergestellt, wobei diese zunächst aufgeschmolzen werden und anschließend in einem geeigneten Werkzeug, welches der komplementäre Form des Filtergehäuses entspricht, wieder erkaltet werden. Im Anschluss daran wird das Filtermedium, d.h. das mehrlagige, geschichtete, absorbierende Vliesmaterial dann in das Innere des Filtergehäuses eingebracht, bevorzugt in eine dafür vorgesehene Halterung. Es ist aber auch möglich, das Filtermedium auf ein dornhaltiges Gebilde aufzusetzen.

Der erfindungsgemäße Filter eignet sich vor allem zum Filtern von Ölen, Kraftstoffen oder anderen wässrigen oder organischen Flüssigkeiten, beispielsweise von organischen Lösungsmitteln oder Kühlflüssigkeiten oder aber von Emulsionen. Dabei erweist sich die Verwendung des erfindungsgemäßen Filters zum Filtern von Ölen, die vor allem in Verbrennungsmotoren oder in Verarbeitungsmotoren eingesetzt werden, als besonders geeignet. Weiterhin kann es sich empfehlen, den erfindungsgemäßen Filter zum Filtrieren von Kraftstoffen vor deren Verbrennung zu verwenden, um auf diese Weise zur Reduzierung von Russpartikeln in Dieselmotoren beizutragen.

Der erfindungsgemäße Filter soll an Hand von drei nachstehenden Figuren graphisch dargestellt werden, wobei die skizzierten Formen nicht einschränkend hinsichtlich der möglichen Ausführungsformen zu werten sind.

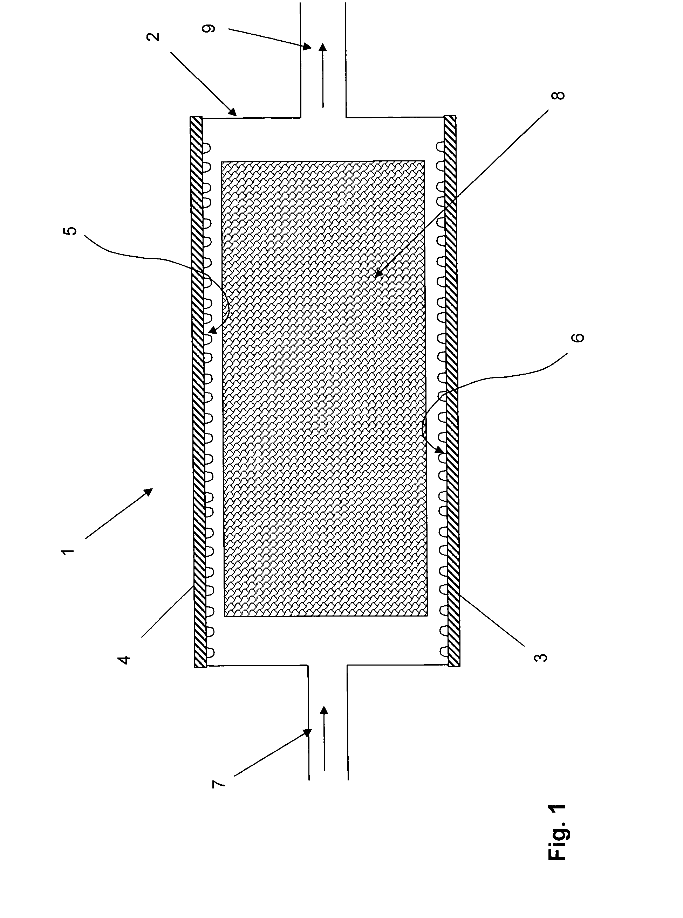

Figur 1 zeigt eine schematische Darstellung eines erfindungsgemäßen Filters 1, der unter anderem aus einem Filtergehäuse 2 aus einem thermoplastischen Kunststoff besteht und an seinen Längsseiten 3, 4 an den jeweiligen Innenwänden jeweils strukturierte Oberflächen 5, 6 aufweist. Das zu filtrierende Medium wird zunächst durch den Zufluss 7 in das Innere des Filtergehäuses 2 geleitet, durchströmt dann das absorbierende Filtermedium in Form eines Vliesmaterials 8 und verlässt in gefilterter Form das Filtergehäuse 2 durch den Abfluss 9.

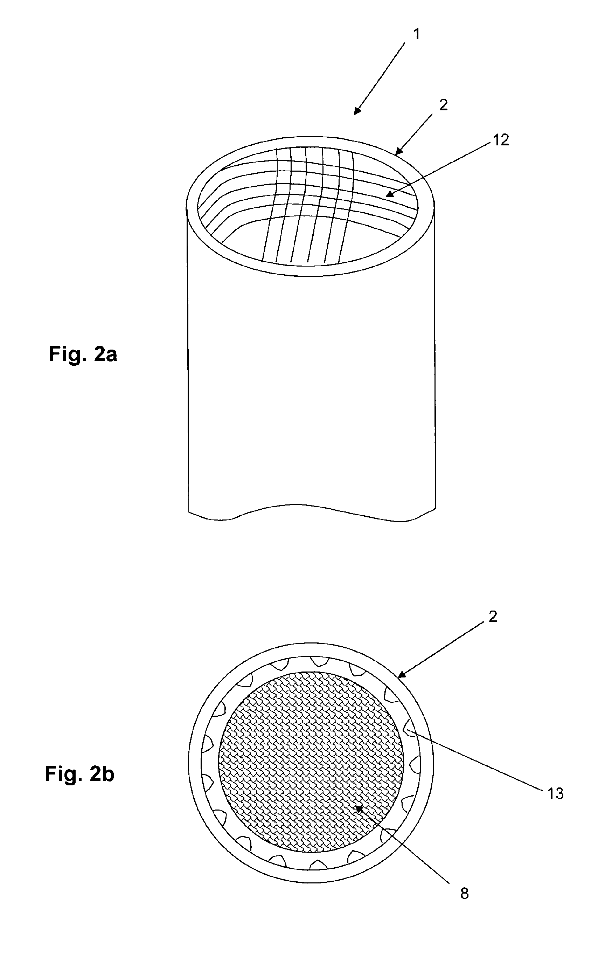

Die Figur 2a stellt schematisch einen erfindungsgemäßen Filter 1 dar, der an der Innenseite des Filtergehäuses 2 eine strukturierte Oberfläche aus rillenförmigen Linien oder Vertiefungen 12 aufweist, welche sich bevorzugt kreuzen. In Fig. 2b ist schematisch dargestellt, wie die Erhebungen 13 der rillenförmigen Linien 12 der strukturierten Oberfläche in das Innere des erfindungsgemäßen Filters 1 hineinragen. Das absorbierende Vliesmaterial 8 ist in dieser Figur ebenfalls dargestellt.

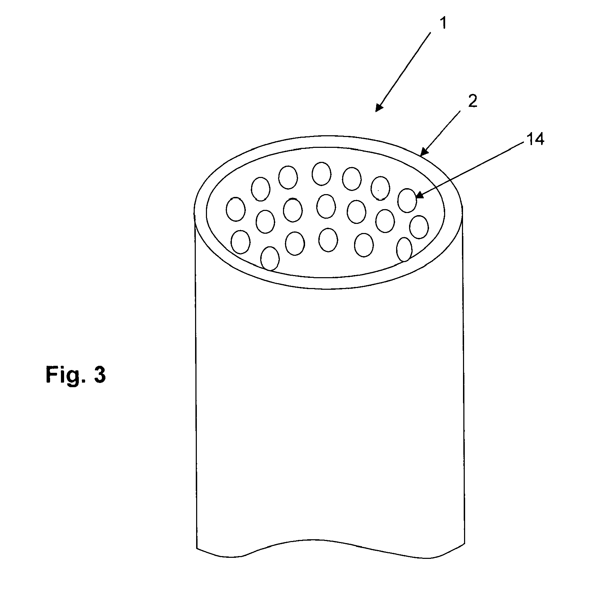

Die Figur 3 zeigt eine weitere Ausführungsform eines erfindungsgemäßen Filters 1, wobei von diesem nur das Filtergehäuse 2 dargestellt ist. Dessen Innenwand weist eine strukturierte Oberfläche in Form von Kreisen 14 auf.

Der erfindungsgemäße Filter wird nachstehend an Hand eines vorteilhaften Beispiels näher erläutert.

### Beispiel :

Aus einem fluorierten Polyethylen wurde durch Spritzgießen ein säulenförmiges Filtergehäuse hergestellt, das eine Länge von 40 cm und einen Durchmesser von 15 cm aufwies. Das Filtergehäuse enthielt in der unteren Mitte eine Halterung, in die das Filtermedium eingebracht werden kann. Daneben verfügte das Filtergehäuse über einen Zufluss und einen Abfluss, wobei der Abfluss durch einen mit einem Gewinde versehenen Deckel verschlossen werden kann. Die innere Oberfläche des Filtergehäuses wies linienförmige Strukturen auf, die sich entlang der gedachten Verbindungslinie vom Zufluss in Richtung auf den Abfluss dreimal in der Weise änderten, dass der Winkel, der sich aus der gedachten Verbindungslinie zwischen dem Zufluss und dem Abfluss einerseits und den linienförmigen Strukturen andererseits ergibt, sich um jeweils etwa 30° änderte.

Als Filtermedium verwendete man ein dreilagiges Tissuepapier aus Naturfasern (50 % Langfasern mit einer durchschnittlichen Faserlänge von mind. 1 mm und 50 % Kurzfasern mit einer Faserlänge von weniger als 1 mm) wobei die einzelnen Lagen durch Stärke miteinander verbunden waren. Durch Prägen des Filtermediums wurden ca. 30 % der gesamten Oberfläche des Tissuepapiers verdichtet, so dass das Tissuepapier Zonen unterschiedlicher Dichte aufwies, was die Fließgeschwindigkeit der zu filtrierenden fluiden Substanzen beeinflusste. Das dreilagige Tissuepapier besaß ein Flächengewicht von 60 g/m2.

Der so erhaltene Filter bestehend aus dem vorstehend beschriebenen Filtergehäuse und dem Filtermedium wurde in einer Verarbeitungsmaschine der Spanplattenindustrie, einer so genannten Spanplattenpresse hinsichtlich seiner Filterungseigenschaften getestet. Die Verarbeitungsmaschine enthielt ein in der Spanplattenindustrie übliches Hydrauliköl des ursprünglichen Qualitätsstandards (ISO 4406, Reinheitsklasse :15/10), das in dieser Anlage bereits drei Jahre lang genutzt wurde und dessen Reinheitsgrad mittlerweile auf einen Qualitätsstandard von (ISO 4406, Reinheitsklasse: 22/10) abgesunken war. Über einen Zeitraum von insgesamt 120 Tagen wurde das Hydrauliköl mit dem erfindungsgemäßen Filter behandelt, wobei jeweils nach 30 Tagen der erfindungsgemäße Filter durch einen neuen ebenfalls erfindungsgemäßen Filter ersetzt worden ist. Nach 120 Tagen wurde eine Probe des Hydrauliköls aus der Spanplattenpresse entnommen und anschließend analysiert. Dabei beobachtete man eine qualitative Verbesserung des erhaltenen Hydrauliköls auf einen Qualitätsstandard von (ISO 4406, Reinheitsklasse: 19/17). Während dieser Zeit war keine Einschränkung hinsichtlich der Betriebsfähigkeit der Spanplattenpresse erkennbar.

Der Versuch wurde um weitere vier Wochen mit neuen erfindungsgemäßen Filtern verlängert. Bei der Analyse einer Probe des dadurch erhaltenen Hydrauliköls wurde eine weitere Verbesserung des Qualitätsstandards nach ISO 4406 auf die Reinheitsklasse 17/13 festgestellt.

Bei noch längerer Behandlung mit dem erfindungsgemäßen Filter oder nach Einsatz größerer erfindungsgemäßer Filter bzw. bei häufigerem Auswechseln des erfindungsgemäßen Filters ist eine weitere qualitative Verbesserung des Hydrauliköls auf einen Qualitätsstandard zu erwarten, welcher nahezu dem Reinheitsgrad des ursprünglichen Hydrauliköls entspricht (ISO 4406, Reinheitsgrad : 15/10).

## Patentansprüche

1. Filter (1) für fluide Substanzen, bestehend aus einem Filtergehäuse (2) mit wenigstens einem Zufluss (7) und wenigstens einem Abfluss (9) sowie einem Filtermedium (8) im Inneren des Filtergehäuses (2), wobei als Filtermedium (8) ein absorbierendes Vliesmaterial verwendet wird, das Filtergehäuse (2) im Inneren eine strukturierte Oberfläche (5, 6, 12, 13, 14) zur Erzeugung von turbulenten Strömungen bei den fluiden Substanzen aufweist und aus entsprechenden Kunststoffen besteht und wobei als absorbierendes Vliesmaterial ein mehrlagiges, geschichtetes, absorbierendes Vliesmaterial verwendet wird.

2. Filter nach Anspruch 1, wobei das mehrlagige, absorbierende Vliesmaterial im Inneren keinen Kern aufweist.

3. Filter nach einem der Ansprüche 1 oder 2, wobei dieser in ein weiteres äußeres Gehäuse mit einem Zufluss und einem Abfluss für die fluide Substanz einsetzbar ist.

4. Filter nach einem der Ansprüche 1 bis 3, wobei dessen Filtergehäuse (2) im Inneren eine solche strukturierte Oberfläche (12, 13) aufweist, die sich vom Zufluss (7) zum Abfluss (9) hin in ihrer Form und/oder ihrer Geometrie ändert.

5. Filter nach Anspruch 1 bis 4, wobei die strukturierte Oberfläche geschlossene geometrische Strukturen (13, 14) aufweist.

6. Filter nach Anspruch 1 bis 4, wobei die strukturierte Oberfläche linienförmige Strukturen (12) aufweist.

7. Filter nach Anspruch 6, wobei sich die linienförmigen Strukturen (12) in Richtung vom Zufluss (7) zum Abfluss (9) hin mindestens einmal in der Weise ändern, dass der Winkel, welcher sich aus der gedachten Verbindungslinie zwischen dem Zufluss (7) und dem Abfluss (9) einerseits und den linienförmigen Strukturen (12) andererseits ergibt, sich mindestens einmal um wenigstens 1° ändert.

8. Filter nach Anspruch 1 bis 7, wobei dieser zusätzlich noch einen Deckel am Abfluss (9) aufweist.

9. Filter nach Anspruch 1 bis 8, wobei das Filtergehäuse (2) nicht aus verschiedenen Einzelteilen eines Bausatzes, sondern im Wesentlichen aus einem einzigen Teil aus einem thermoplastischen Kunststoff besteht.

10. Filter nach Anspruch 9, wobei das Filtergehäuse (2) aus einem Polyolefin besteht.

11. Filter nach Anspruch 10, wobei das Filtergehäuse (2) aus einem halogenierten Polyolefin besteht.

12. Filter nach Anspruch 1 bis 11, wobei die einzelnen Lagen des absorbierenden Vliesmaterials (8) aus unterschiedlichen Fasern bestehen.

13. Filter nach Anspruch 1 bis 12, wobei als absorbierendes Vliesmaterial (8) ein mehrlagiges Tissuepapier verwendet wird.

14. Filter nach Anspruch 13, wobei wenigstens eine Lage des Tissuepapiers Fasern aus thermoplastischen Kunststoffen aufweist.

15. Filter nach einem der Ansprüche 1 bis 14, wobei das absorbierende Vliesmaterial (8) und/oder das Filtergehäuse (2) zusätzlich noch Substanzen enthält, welche zur kontrollierten Abgabe von chemischen Additiven für die zu filtrierenden Öle, Kraftstoffe oder wässrigen bzw. organischen Flüssigkeiten geeignet sind.

16. Filter nach Anspruch 1 bis 15, wobei das absorbierende Vliesmaterial (8) Flächen mit unterschiedlichen Dichtezonen enthält.

17. Verfahren zur Herstellung eines Filters gemäß einem der Ansprüche 1 bis 16, **dadurch gekennzeichnet, dass** das gesamte Filtergehäuse durch Blasformen oder Spritzgießen aus den entsprechenden Kunststoffen hergestellt ist.

18. Verfahren nach Anspruch 17, **dadurch gekennzeichnet, dass** im Anschluss an die Herstellung des Filtergehäuses das absorbierende Vliesmaterial in das Innere des Filtergehäuses gebracht wird.

19. Verwendung eines Filters gemäß einem der Ansprüche 1 bis 16 zum Filtern von Ölen, Kraftstoffen oder anderen wässrigen oder organischen Flüssigkeiten.

20. Verwendung eines Filters gemäß einem der Ansprüche 1 bis 16 zum Filtern von solchen Ölen, die in Verbrennungsmotoren eingesetzt werden.

21. Verwendung eines Filters gemäß einem der Ansprüche 1 bis 16 zum Filtern von solchen Ölen, die in Verarbeitungsmaschinen eingesetzt werden.

22. Verwendung eines Filters gemäß einem der Ansprüche 1 bis 16 zum Filtern von Kraftstoffen vor deren Verbrennung.
